# EUROPEAN PATENT SPECIFICATION

(11) **EP 3 518 613 B1**
(45) Date of publication and mention of the grant of the patent: **04.03.2020**
(21) Application number: 18153743.2
(22) Date of filing: 26.01.2018
(51) Int. Cl.: H04W 76/15, H04W 84/12, H04W 28/02, H04W 28/08

(54) **DISTRIBUTING DATA OF A DATA STREAM OF A USER EQUIPMENT VIA MULTIPLE ACCESS GATEWAYS**
VERTEILUNG VON DATEN EINES DATENSTROMS EINES BENUTZERGERÄTS ÜBER GATEWAYS MIT MEHRFACHZUGRIFF
DISTRIBUTION DES DONNÉES D'UN FLUX DE DONNÉES D'UN ÉQUIPEMENT UTILISATEUR PAR L'INTERMÉDIAIRE DE PASSERELLES D'ACCÈS MULTIPLES

(43) Date of publication of application: 31.07.2019
(73) Proprietor: Deutsche Telekom AG, 53113 Bonn (DE)
(72) Inventor: Kadel, Gerhard, 64293 Darmstadt (DE); Grigat, Michael, 64372 Ober-Ramstadt (DE)
(74) Representative: Braun-Dullaeus Pannen Emmerling Patent- & Rechtsanwaltspartnerschaft mbB

(56) References cited:
- US-A1- 2014 201 383
- US-A1- 2015 131 542
- SRIKANTH KANDULA KATE CHING-JU LIN TURAL BADIRKHANLI DINA KATABI MIT NTU/MIT KANDULAMUIT EDU KATEGAMMASAIL MIT EDU: "FatVAP: Aggregating AP Backhaul Capacity to Maximize Throughput", USENIX,, 5 April 2008 (2008-04-05), pages 1-15, XP061010679, [retrieved on 2008-04-05]
- DOMENICO GIUSTINIANO ET AL: "WiSwitcher", PROGRAMMABLE ROUTERS FOR EXTENSIBLE SERVICES OF TOMORROW, ACM, 2 PENN PLAZA, SUITE 701 NEW YORK NY 10121-0701 USA, 21 August 2009 (2009-08-21), pages 43-48, XP058089476, DOI: 10.1145/1592631.1592642 ISBN: 978-1-60558-446-1

## Description

The invention relates to a data manager for distributing data of a data stream towards a user equipment via a first wireless local area network link and the second wireless local area network link. The invention further relates to a communication system and a method.

Modern access gateways, for example home gateways or gateways in public areas, may provide a wireless local area network interface that grants wireless network access to a user equipment.

Some local networks comprise more than one access gateway, for example in a shopping mall, a school, a university or a big family home. These access gateways may be connected to a communication network via different network access entity. This means, a first access gateway may connect to the communication network via a first network access entity and a second access gateway may connect to the communication network via a second network access entity different to the first network access entity. Each access gateway has a user interface to communicate with the user equipment via a wireless local area network link. A data stream towards the user equipment may be transmitted from the communication network via the access gateways and the respective wireless local area network link.

The wireless local area network links may not work completely failure-free so that a transmission between the communication network and the user equipment may be disturbed.

Prior art is
- US 2014/201383 A1,
- US 2015/131542 A1,
- SRIKANTH KANDULA KATE CHING-JU LIN TURAL BADIRKHANLI DINA KATABI MIT NTU/MIT KANDULAMUIT EDU KATEGAMMASAIL MIT EDU: "FatVAP: Aggregating AP Backhaul Capacity to Maximize Throughput", USENIX,, 5 April 2008 (2008-04-05), pages 1-15, XP061010679,
- DOMENICO GIUSTINIANO ET AL: "WiSwitcher", PROGRAMMABLE ROUTERS FOR EXTENSIBLE SERVICES OF TOMORROW, ACM, 2 PENN PLAZA, SUITE 701 NEW YORK NY 10121-0701 USA, 21 August 2009 (2009-08-21), pages 43-48, XP058089476, DOI: 10.1145/1592631.1592642 ISBN: 978-1-60558-446-1.

It is an objective of the invention to provide an advantageous concept for distributing data of a user equipment.

This objective is achieved by the features of the independent claims. Further embodiments are described in the dependent claims, in the description as well as in the figures.

The invention is based on the finding that a data stream of a user equipment may be controlled by a data manager in an advantageous way by comparing link qualities of wireless local area network links of a at least two access gateways.

According to a first aspect of the invention, the objective is solved by a data manager for distributing data of a data stream of a user equipment via a first wireless local area network link and a second wireless local area network link. The user equipment is configured to simultaneously communicate over the first wireless local area network link and the second wireless local area network link. The first wireless local area network link connects the user equipment to a first access gateway, wherein the first access gateway is configured to connect to a first network access entity providing access to a communication network via a first communication link. The second wireless local area network link connects the user equipment to a second access gateway, wherein the second access gateway is configured to connect to a second network access entity providing access to the communication network via a second communication link. The first wireless local area network link and the first communication link form a first composite communication link. The second wireless local area network link and the second communication link form a second composite communication link. The data manager comprises a network interface configured to receive a first status signal indicating a link quality of the first composite communication link, and a second status signal indicating a link quality of the second composite communication link. The data manager comprises a processor configured to determine a reduction of an amount of data of the data stream communicated over the first wireless local area network link and to determine an increase of an amount of data of the data stream communicated over the second wireless local area network link, if the second status signal indicates a higher link quality than a link quality that is indicated by the first status signal.

The data manager distributes data of a data stream towards or from a user equipment via a first communication link and via a second communication link. The data flow manager distributes data of a downlink data stream and/or of an uplink data stream. The data manager may be allocated in a virtual computer system or a physical computer system. The data manager may be allocated in an LTE ,a 5G, a fixed or a converged communication network. For example, the data manager may be allocated in an access and mobility management function (AMF), in a session management function (SMF), an application function (AF) or other functional blocks within a 5G network architecture. The data manager may alternatively be allocated in a mobility management entity (MME), a serving gateway (SGW) or a packet data network gateway (PGW) of a LTE network architecture. The data manager may comprise support for access traffic steering, switching and splitting (ATSSS). This may show benefits in access networks from 3GPP and non-3GPP networks.

The data manager may also be part of a hybrid-access aggregation point, HAAP, which controls access bundling in DSL or LTE or 5G, or a combination thereof. Such a hybrid access may be used to connect the access gateway to the network access entity.

The data manager may be an access resource manager. The data manager comprises a network interface. The network interface may be a logical network interface. The data manager further comprises a processor. The processor may be a virtual processor or a CPU or a microcontroller within a computer system. For example, the data manager is allocated within a server and the processor comprises the CPU of the server.

The user equipment may be a computer system like a smartphone, a tablet computer or a notebook. The user equipment may be configured to communicate over the first wireless local area network link and the second wireless local area network link or additional wireless local area network links simultaneously.

The access gateways may be router of a home network, in particular home gateways. The first communication link and the second communication link may be fixed line communication links, in particular a DSL link, or radio communication links, in particular a RAN or a Fixed Wireless Access (FWA) link. The first access gateway may be configured to provide the first wireless local area network link and the second access gateway may be configured to provide the second wireless local area network link. The home network may be a local area network within a private or a public environment, for example a local area network in a restaurant, a shopping mall, a private home, an airplane, a ship or a train.

From the user equipment point of view, there are at least two possible communication links into the communication network. On the one hand, there is the first wireless local area network link and the first communication link and on the other hand, the user equipment may communicate with the communication network via the second wireless local area network link and the second communication link.

The user equipment may also be connected to the access gateway by more wireless local area network links than the first wireless local area network link and the second wireless local area network link. In this case, the user equipment may have more communication links into the communication network, each communication link comprising a wireless local area network link and the communication link.

The first wireless local area network link and/or the second wireless local area network link and/or a third wireless local area network link may comprise a third access gateway acting as a slave with respect to the first access gateway or the second access gateway acting as a master for the third access gateway, respectively. Form the user equipment point of view, there are therefore a plurality of wireless local area network links and the combination of master and slave access gateways represent a multi access point scenario for the user equipment.

Determining an increase and a decrease of an amount of data, in particular an increase and a decrease of an amount of data in a time interval, may comprise providing distribution parameters specifying the amount of data that is to be reduced and the amount of data that is to be increased over the first wireless local area network link or the second wireless local area network link, respectively. Therefore, the data manager provides an advantageous possibility to increase the link quality of the user equipment without determining the link quality of the first wireless local area network link and the second wireless local area network link directly.

In an embodiment, the processor is configured to determine a reduction of a data rate or a reduced data rate on the first wireless local area network link for reducing the data amount communicated over the first wireless local area network link, and to determine an increase of a data rate or an increased data rate on the second wireless local area network link, in particular a corresponding increased data rate, for increasing the data amount communicated over the second wireless local area network link.

A data rate is a possibility for the data manager to control the data stream of the user equipment. Choosing corresponding data rates, i.e. the data rate is reduced by the same amount as the respective data rate utilizes the possible data rate on the first and second wireless local area network links.

In an embodiment, the network interface is configured to receive a third status signal indicating a link quality of the first communication link, and a fourth status signal indicating a link quality of the second communication link. The processor is configured to determine a link quality of the first wireless local area network link by comparing the first status signal and the third status signal and to determine a link quality of the second wireless local area network link by comparing the second status signal and the fourth status signal. The processor is configured to determine the reduction of the amount of data of the data stream communicated over the first wireless local area network link and to determine the increase of the amount of data of the data stream communicated over the second wireless local area network link, if the link quality of the second wireless local area network link is higher than the link quality of the first wireless local area network link.

The third status signal may be provided by the first access gateway and indicates the signal quality of the first communication link between the first access gateway and the first network access entity. The fourth status signal may be provided by the second access gateway and indicates the signal quality of the second communication link between the second access gateway and the second network access entity. Alternatively the first network access entity provides the third status signal, for example based on former signal quality measurements and the second network access entity provides the fourth status signal, respectively.

A comparison of the third status signal and the first status signal indicates the link quality of the first wireless local area network link. A comparison of the fourth status signal and the second status signal indicates the link quality of the second wireless local area network link.

In an embodiment, the processor is configured to determine a first amount of data of the data stream communicated over the first wireless local area network link and a second amount of data of the data stream communicated over the second wireless local area network link, the first amount of data being smaller than the second amount of data, in order to determine the reduction of amount of data on the first wireless local area network link and the increase of amount of data on the second wireless local area network link.

A distribution of the amount of data may increase the data stream via the wireless local area network links towards and/or from the user equipment by distributing a predetermined amount of data onto two different amounts of data.

In an embodiment, the processor is configured to determine the reduction of the data communicated over the first wireless local area network link and the increase of the data communicated over the second wireless local area network link if a comparison of the link quality of the first wireless local area network link and the quality of the first communication link indicates a disturbance of the first wireless local area network link.

The data manager and other entities of the communication network are in general not able to directly determine a quality of a wireless local area network link that is established within the home network, in particular the first wireless local area network link and the second wireless local area network link. The first data signal indicating the link quality of the first composite communication link, the second status signal indicating the quality of the second composite communication link allow the data manager to determine indirectly the link quality of the first wireless local area network link and the second wireless local area network link.

The link quality of the first wireless local area network link and/or the second wireless local area network link may deteriorate. If the deterioration is bigger than a predetermined value in a predetermined time, the processor may determine that the link quality of the first wireless local area network link and/or the second wireless local area network link, respectively, is not good enough for a failure-free transmission.

In an embodiment, the data manager is a logical entity within the communication network and the data manager is allocated in at least one other functional entity of the communication network, in particular split over more than one other functional entity in an edge cloud of the communication network.

The data manager can be allocated in one or more functional entities of the communication network and may comprise a functionality of a hybrid access aggregation point, HAAP, to control other hybrid access functionalities.

The data manager may be virtualized and distributed over a plurality of servers running functional network nodes using a functional split. The data manager may be allocated centrally or peripheral, in particular in an edge cloud of the communication network. Such a virtual system has resource benefits compared to a common communication network. For example, a functional split of network entities is possible.

The data manager may be split in other functional entities of layer 2, 2.5 or 3 of LTE or 5G communication networks.

In an embodiment, the respective link quality is determined by a link quality indicator that indicates at least one of the following link quality parameters: bit error rate, packet error rate, communication delay, signal to noise ratio, communication bandwidth. These parameters influence a transmission and may be detected directly or indirectly.

In an embodiment, the processor is configured to determine the reduction of the amount of data and the increase of the amount of data upon a basis of a look-up table, the look-up table assigning reduction of amounts of data and increase of amounts of data to link qualities.

A look-up table may decrease the processing time that is needed to determine the reduction and/or the increase of the amount of data, respectively.

In an embodiment, the processor is configured to output a data control signal indicating the reduction of the amount of data and the increase of the amount of data, wherein the network interface is configured to transmit the first data control signal towards a data providing entity of the communication network.

Providing control signals to control the data stream towards the user equipment allows the data manager to directly influence the data stream of the user equipment. Providing a control signal indicating the reduction of the amount of data and the increase of the amount of data controls the data stream of the user equipment and enables the data manager to control the splitting of the data stream. The data providing entity may be a user plane function, UPF, a session management function, SMF, of a 5G network or a PGW or a SGW of a LTE network.

According to a second aspect of the invention, the objective is solved by a communication system. The communication system comprises a first network access entity for providing a network access via a first communication link to a first access gateway configured to connect to a communication network via the first communication link and a second network access entity for providing a network access via a second communication link to a second access gateway configured to connect to the communication network via the second communication link. The communication system comprises a user equipment configured to connect to the first access gateway via a first wireless local area network link and to connect to the second access gateway via a second wireless local area network link. The first wireless local area network link and the first communication link form a first composite communication link. The second wireless local area network link and the second communication link form a second composite communication link. The user equipment is configured to simultaneously communicate over the first wireless local area network link and the second wireless local area network link. The communication system comprises a data manager. The data manager comprises a network interface configured to receive a first status signal indicating a link quality of the first composite communication link and a second status signal indicating a link quality of the second composite communication link. The data manager comprises a processor configured to determine a reduction of an amount of data of the data stream communicated over the first wireless local area network link and to determine an increase of an amount of data of the data stream communicated over the second wireless local area network link, if the second status signal indicates a higher link quality than a link quality that is indicated by the first status signal.

The communication system may provide a high link quality for the user equipment.

In an embodiment, the processor of the data manager is configured to output a data control signal indicating the reduction of the amount of data and the increase of the amount of data, wherein the network interface is configured to transmit the first data control signal towards a data providing entity of the communication network.

The processor generates a control signal to indicate the distribution of the data stream of the user equipment. The control signal may be handed over to the data providing entity to control the data stream of the user equipment.

In an embodiment, the data manager is allocated in a functional entity of the communication network or wherein the data manager is allocated in the communication network split over a plurality of functional network entities.

The data manager can be allocated in one or more functional entities of the communication network and may comprise a functionality of a hybrid access aggregation point, HAAP, to control other hybrid access functionalities.

A functional entity of a 5G network, for example, comprises an access and management mobility function, AMF, a session management function, SMF, an application function, AF and others. Functional entities in an LTE network may, for example, comprise a mobility management entity, MME, a serving gateway, SGW, a PDN gateway, PGW and others.

In an embodiment, the functional split of the data manager distributes the data manager at least partially to an edge of the communication system.

Splitting, i.e. distributing the functionality of the data manager over the plurality of functional entities and the communication network, saves resources of the communication network.

According to a third aspect of the invention, the objective is solved by a method for distributing data of a data stream of a user equipment via a first wireless local area network link and a second wireless local area network link. The user equipment is configured to simultaneously communicate over the first wireless local area network link and the second wireless local area network link. The first wireless local area network link connects the user equipment to a first access gateway configured to connect to a first network access entity via a first communication link. The first network access entity provides access to a communication network for the first access gateway. The second wireless local area network link connects the user equipment to a second access gateway configured to connect to a second network access entity via a second communication link. The second network access entity provides access to a communication network for the second access gateway. The first wireless local area network link and the first communication link form a first composite communication link. The second wireless local area network link and the second communication link form a second composite communication link. The method comprises:
receiving a first status signal indicating a link quality of the first composite communication link,
receiving a second status signal indicating a link quality of the second composite communication link;
determining a reduction of an amount of data of the data stream communicated over the first wireless local area network link and an increase of an amount of data of the data stream communicated over the second wireless local area network link, if the second status signal indicates a higher link quality than a link quality that is indicated by the first status signal.

The receiving may be performed by the network interface of the data manager. The determining may be performed by the processor of the data manager. The method may be performed automatically by the data manager.

The invention concept is now described by way of example with reference to the accompanying drawings, in which:
- Fig. 1: shows a schematic diagram of a data manager according to an embodiment of the invention;
- Fig. 2: shows a schematic diagram of an arrangement according to the described embodiment of the invention;
- Fig. 3: shows a schematic flowchart diagram of a method according to an embodiment of the invention;
- Fig. 4: shows a schematic flowchart diagram of a method according to another embodiment of the invention; and
- Fig. 5: shows a schematic diagram of an arrangement according to another embodiment of the invention.

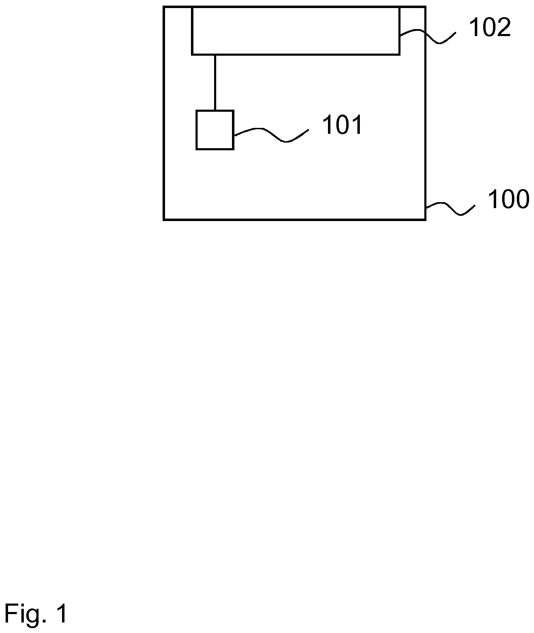

Fig. 1 shows a schematic diagram of a data manager 100. In the described embodiment, the data manager 100 is an access resource manager. The data manager 100 comprises a processor 101. The processor 101 of the described embodiment is a CPU of a server entity within the communication network. In another embodiment, the processor 101 is a virtual processor of a network entity or a plurality of network entities or a microcontroller.

The data manager 100 comprises a network interface 102. The network interface 102 is a logical interface. In another embodiment, wherein the data manager 100 is a physical entity, the network interface 102 is a physical interface for receiving or transmitting fixed-line or radio signals.

The data manager 100 is allocated in a core access and mobility management function, AMF, of a 5G network architecture. In another embodiment, the data manager 100 is allocated in a session management control function, SMF, of a 5G network or another network entity of a 5G network or of an LTE network, in particular a mobility management entity, MME. In yet another embodiment, the data manager 100 is distributed on a functional layer over a plurality of functional network entities, in particular in an edge cloud of the communication network.

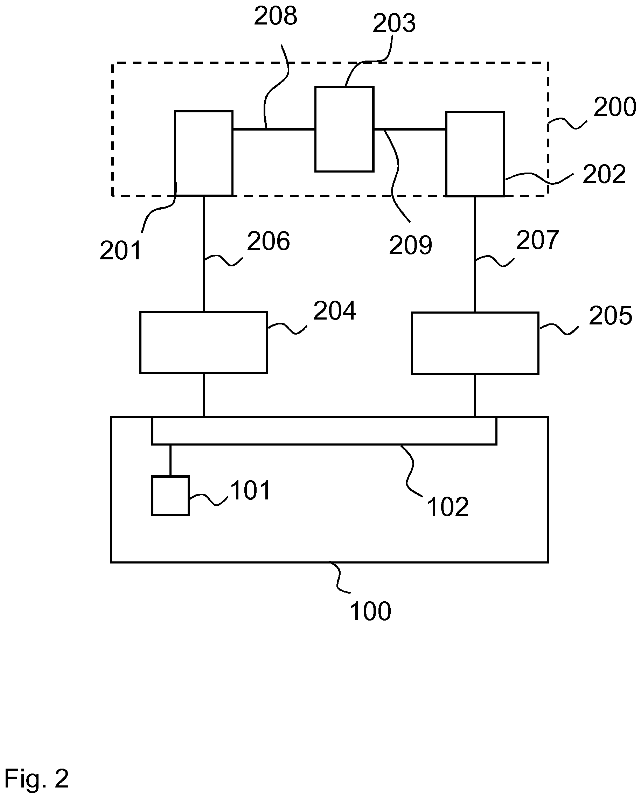

Fig. 2 shows a schematic diagram of an arrangement with the data manager 100 according to an embodiment of the invention. The arrangement comprises a home network 200. The home network is a network of a private home. In another embodiment, the home network is a public or private network of a restaurant, a shopping mall, a ship, an airplane, a train or others. The home network 200 comprises a first access gateway 201 and a second access gateway 202. The first access gateway 201 and the second access gateway 202 are routers for providing a network access to the communication network for private users or business users.

The home network 200 comprises a user equipment 203. The user equipment 203 is a mobile phone, used in the home network 200. In other embodiments, the user equipment 203 is another computer system, in particular a tablet computer, a desktop computer or a smart watch.

The arrangement comprises a first network access entity 204 and a second network access entity 205. In the described embodiment, the first network access entity 204 and the second network access entity 205 are access entities for a radio access network, RAN, and provide access to a 5G network or an LTE network. For example, the first network access entity 204 and/or the second network access entity 205 is an eNodeB for an LTE network or gNodeB for a 5G network. In another embodiment, the first network access entity 204 and/or the second network access entity 205 is a fixed-line network access network entity.

The data manager 100 is functionally connected to the first network access entity 204 and to the second network access entity 205. The first access gateway 201 is connected to the first network access entity 204 via a first communication link 206. The second access gateway 202 is connected to the second network access entity 205 via a second communication link 207. In the described embodiment, the first communication link 206 is a RAN link, in particular for a 5G or LTE network. In another embodiment, wherein the first network access entity 204 provides a fixed-line link for the first access gateway 201, the first communication link 206 is a DSL link. The second communication link 207 is also a RAN link, in particular for a 5G or LTE network. In another embodiment, wherein the second network access entity 205 provides a fixed-line link for the second access gateway 202, the second communication link 207 is a fixed-line communication link, in particular DSL network link.

The first access gateway 201 is configured to provide a first wireless local area network link 208. The second access gateway 201 is configured to provide a second wireless local area network link 209. The first access gateway 201 is configured to control the first wireless local area network link 208 and second access gateway 202 is configured to control the second wireless local area network link 209.

The user equipment 203 has access to the communication network via the first wireless local area network link 208 and the first communication link 206, therefore, the first wireless local area network link 208 and the first communication link 206 forming a first composite communication link. The user equipment 203 has also access to the communication network via the second wireless local area network link 209 and the second communication link 207, therefore, the second wireless local area network link 209 and the second communication link 207 forming a second composite communication link.

The data manager 100 is configured to receive status signals. In particular, the network interface 102 of the data manager 100 is configured to receive status signals and the processor 101 is configured to process status signals. The first network access entity 204 is configured to forward status signals that are transmitted from the user equipment 203 towards the data manager 100, i.e. towards the communication network. The second network access entity 205 is configured to forward status signals that are transmitted from the user equipment 203 towards the data manager 100, i.e. towards the communication network.

The user equipment 203 is configured to transmit a first status signal via the first composite communication link towards the data manager 100. The first status signal indicates the link quality of a combination of the first wireless local area network link 208 and the first communication link 206. The user equipment 203 is also configured to transmit a second status signal towards the communication network, in particular towards the data manager 100, via the second composite communication link. The second status signal indicates the link quality of the second composite communication link. The second status signal indicates the link quality of a combination of the second wireless local area network link 209 and the second communication link 207.

The data manager 100 is configured to compare the first status signal and the second status signal. The data manager 100 can therefore determine the link quality of the first composite communication link and the second composite communication link relatively to each other. The link quality of the first communication link 206 and the link quality of the second communication link 207 are known to the data manager by regular communication line tests that may be performed by the first network access entity 204 or the second network access entity 205, respectively. Taking the known link qualities of the first communication link 206 and the link quality of the second communication link 207 into account, the data manager can determine the link qualities of the first wireless local area network link 208 and the second wireless local area network link 209 out of the first status signal or the second status signal, respectively.

In another embodiment, the link quality of the first communication link 206 and the link quality of the second communication link 207 are assumed to be higher than the link quality of both wireless local area network links 208, 209 without testing the first or second communication links 206, 207. In this embodiment, a restriction of a data rate in the composite communication links displays the link quality of the first wireless local area network link 208 or the second wireless local area network link 209, respectively.

In another embodiment, a third status signal indicates the link quality of the first communication link and a fourth status signal indicates the link quality of the second communication link.

The data manager 100 is configured to determine a split of the data stream of the user equipment 203. For determining the split of the data stream of the user equipment 203, the results of the comparisons of the status signals indicating above-mentioned link qualities are used. The data stream of the user equipment 203 comprises data transmitted towards the user equipment 203 and/or data transmitted from the user equipment 203.

The amount of data transmitted over the first wireless local area network link 208 is determined to be increased, if the comparison of the first status signal and the second status signal indicates that the link quality of the first wireless local area network link 208 is higher than the link quality of the second wireless local area network link 209.

The amount of data transmitted via the second wireless local area network link 209 is determined to be increased, if the second status signal indicates a higher link quality than the link quality indicated by the first status signal.

The data manager 100 generates a control signal that comprises a distribution ratio based on the previous determined amounts of data transmitted over the first wireless local area network link 208 or the second wireless local area network link 209. The control signal is transmitted to a data transmitting functional control entity within the communication network, in particular a PGW of a LTE network or a SMF of a 5G network.

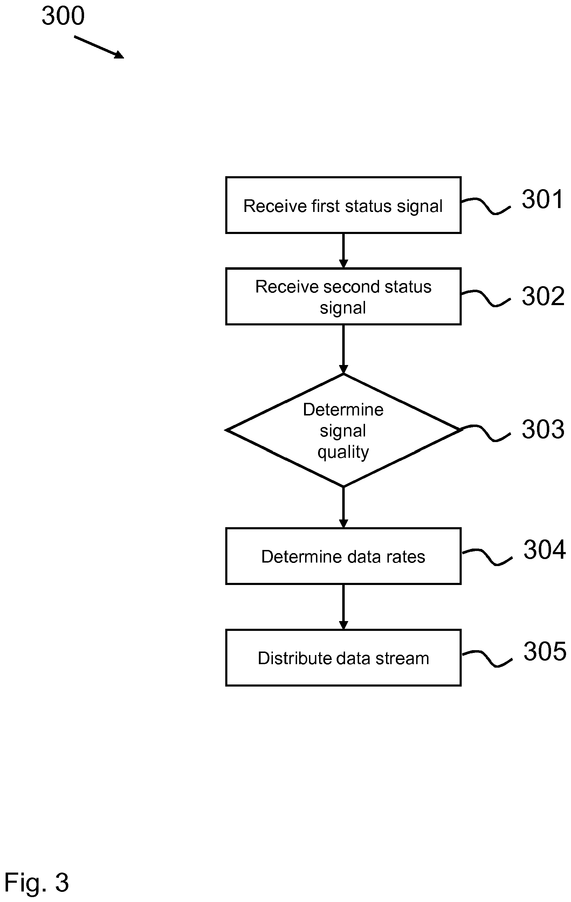

Fig. 3 shows a schematic flowchart diagram 300 of a method according to an embodiment of the invention. In step 301, the data manager 100 receives a first status signal. The first status signal is received by the network interface 102. The received first status signal was transmitted by the user equipment 203 of the home network 200 towards the communication network and is received by the network interface 102 of the data manager 100. The first status signal indicates the quality of the first composite communication link, i.e. the link quality of the combination of the first wireless local area network link 208 and the first communication link 206.

In step 302, a second status signal is received by the network interface 102 of the data manager 100. The second status signal indicates the link quality of the second composite communication link and was also transmitted by the user equipment 203. The second status signal indicates the link quality of the combination of the second wireless local area network link 209 and the second communication link 207.

In another embodiment, the first status signal and the second status signal are received in another order.

The received first status signal and the received second status signal are processed by the data manager 100 in step 303. In particular, the data manager 100 compares the link quality of the first composite communication link with the link quality of the second composite communication link. The result of this comparison indicates the link qualities of the first wireless local area network link 208 and the second wireless local area network link 209.

In step 304, the data manager 100 determines the distribution of the data stream of the user equipment 203 based on the in step 303 determined link quality of the first wireless local area network link 208 and the second wireless local area network link 209.

If the comparison in step 303 indicates that the link quality of the first wireless local area network link 208 is higher than the link quality of the second wireless local area network link 209, the data manager 100 determines in step 304 the distribution of the data stream of the user equipment 203 by increasing the amount of data streamed over the first wireless local area network link 208 and decreasing the amount of data of the data stream communicated over the second wireless local area network link 209.

If the comparison in step 303 indicates that the link quality of the second wireless local area network link 208 is higher than the link quality of the first wireless local area network link 209, the data manager 100 determines in step 304 the distribution of the data stream of the user equipment 203 by decreasing the amount of data streamed over the first wireless local area network link 208 and increasing the amount of data of the data stream communicated over the second wireless local area network link 209.

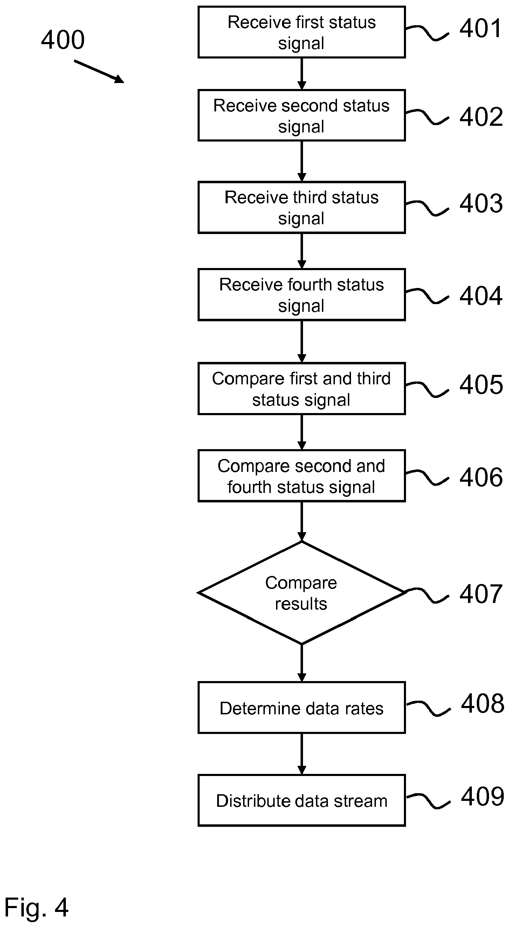

Fig. 4 shows a schematic flowchart diagram 400 of a method according to another embodiment of the invention.

In step 401, the data manager 100 receives a first status signal. The first status signal is received by the network interface 102 and corresponds to the first status signal received in step 301 as described to Fig. 3.

In step 402, a second status signal is received by the network interface 102 of the data manager 100. This step corresponds to the step 302 as described to Fig. 3.

In step 403, a third status signal is received by the network interface 102 of the data manager 100, which was transmitted by the first network access entity 204. The third status signal is based on a link quality measurement of the first communication link 206 the first network access entity 204 performed. In another embodiment, the third status signal was transmitted by the first access gateway 201 and comprises a test signal that is compared to a standard test signal to determine the signal quality of the first communication link 206. The comparison may be performed by the first network access entity 204 or the data manager 100.

In step 404, a fourth status signal is received by the network interface 102 of the data manager 100, which was transmitted by the second network access entity 205. The fourth status signal is based on a link quality measurement of the second communication link 207 the second network access entity 205 performed. In another embodiment, the fourth status signal was transmitted by the second access gateway 202 and comprises a test signal that is compared to a standard test signal to determine the signal quality of the second communication link 207. The comparison may be performed by the second network access entity 205 or the data manager 100.

In another embodiment, the first status signal, the second status signal, the third status signal and the fourth status signal are received in another order.

In step 405 the processor 101 of the data manager 100 compares the first status signal and the third status signal in order to determine a signal quality of the first wireless local area network link 208. In the described embodiment, the first status signal comprises a bit error rate describing the link quality of the first composite communication link and the third status signal comprises a bit error rate describing the link quality of the first communication link 206. The processor 101 determines the link quality of the first wireless local area network link 208 by subtracting the value of the first status signal from the value of the third status signal. In another embodiment the first and/or the third status signal comprises another parameter that is suitable to describe a link quality and the processor 101 may use another mathematical method to determine the link quality of the first wireless local area network link 208.

In step 406 the processor 101 of the data manager 100 compares the second status signal and the fourth status signal in order to determine a signal quality of the second wireless local area network link 208. In the described embodiment, the second status signal comprises a bit error rate describing the link quality of the second composite communication link and the fourth status signal comprises a bit error rate describing the link quality of the second communication link 207. The processor 101 determines the link quality of the second wireless local area network link 209 by subtracting the value of the second status signal from the value of the fourth status signal. In another embodiment the second and/or the fourth status signal comprises another parameter that is suitable to describe a link quality and the processor 101 may use another mathematical method to determine the link quality of the second wireless local area network link 209.

In another embodiment, the order of the steps 405 and 406 is different and, for example, step 406 is performed before step 405.

In step 407 the processor 101 compares the results of the steps 405 and 406, i.e. the processor 101 compares the link qualities of the first wireless local area network link 208 and the second wireless local area network link 209.

If the link quality of the first wireless local area network link 208 is higher than the link quality of the second wireless local area network link 209, the processor 101 determines in step 408 a reduction of the amount of data of the data stream communicated over the first wireless local area network link 208 and an increase of the amount of data of the data stream communicated over the second wireless local area network link 209. If the link quality of the first wireless local area network link 208 is lower than the link quality of the second wireless local area network link 209, the processor 101 determines in step 408 a reduction of the amount of data of the data stream communicated over the second wireless local area network link 208 and an increase of the amount of data of the data stream communicated over the first wireless local area network link 209.

In step 409 the processor 101 generates a control signal comprising the determined data rate amendments indication the decrease or increase of the data of the data stream, respectively. The control signal is transmitted by the network interface 102 towards a data providing entity of the communication network, in the described embodiment a user plane function, UPF, of a 5G network. In other embodiments the control signal is transmitted towards another network entity.

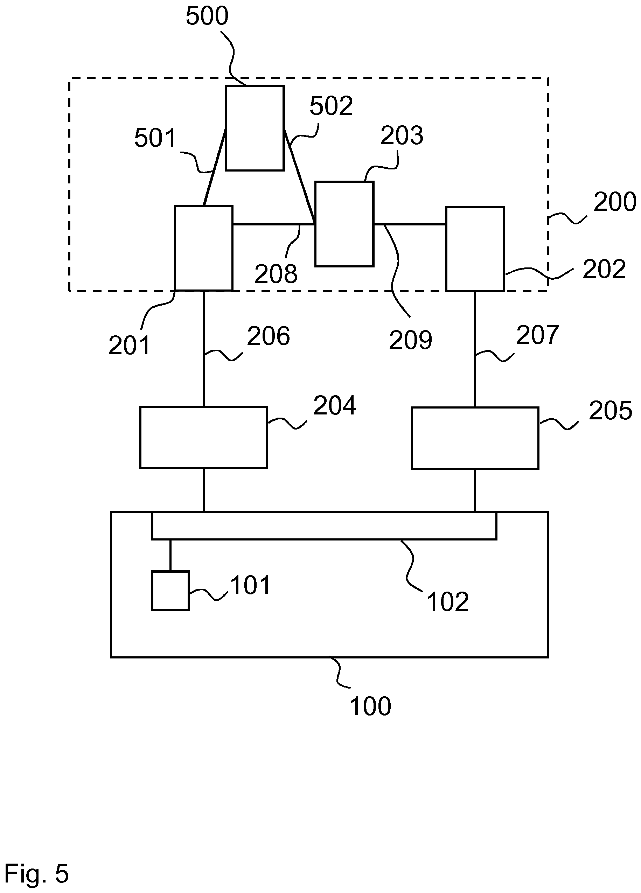

Fig. 5 shows a schematic diagram of an arrangement according to an embodiment of the invention. The arrangement is related to the arrangement according to Fig. 2 as described above. Same objects comprise same reference signs, for example the first network access entity 204 shown in Fig. 5 comprises the same functionality as the first network access entity 204 of Fig. 2.

The arrangement according to Fig. 5 shows a third access gateway 500. The third access gateway 500 is in functional connection with the first access gateway 201 via a link 501, in particular a wireless local area network link. In another embodiment the link 501 is a fixed line link. The third access gateway 500 provides a third wireless local area network link 502 that connects to the user equipment 203.

The first access gateway 201 acts as a master access gateway and the third access gateway 500 acts as a slave access gateway, therefore the third access gateway 500 doesn't provide direct access to the communication network via the first communication link 206. The third access gateway connects the user equipment 203 to the first access gateway 201 via the third wireless local area network link 502 and the link 501.

The third wireless local area network link 502, the link 501 and the first communication link 206 therefore form a third composite communication link.

From the data manager 100 point of view, the combination of the link 501 and the third wireless local area network link 502 act as a wireless local area network link between the first access gateway 201 and the user equipment 203, regardless the third access gateway 500. The data manager therefore can perform a distribution of a data stream of the user equipment 203 according to the above described methods, additionally taking into account the transmission capability of the third composite communication link.

In another embodiment the third access gateway 500 is allocated between the user equipment 203 and the second access gateway 202, acting as a slave of the second access gateway 202. In another embodiment, the home network 200 comprises a plurality of access gateways acting as slaves with respect to the first access gateway 201 and/or the second access gateway 202.

### List of reference signs

- 100: data manager
- 101: processor
- 102: network interface
- 200: home network
- 201: first access gateway
- 202: second access gateway
- 203: user equipment
- 204: first network access entity
- 205: second network access entity
- 206: first communication link
- 207: second communication link
- 208: first wireless local area network link
- 209: second wireless local area network link
- 500: third access gateway
- 501: link
- 502: third wireless local area network link
- 300, 400: flowchart diagram
- 301 to 306: step
- 401 to 409: step

## Claims

1. A data manager (100) for distributing data of a data stream of a user equipment (203) via a first wireless local area network link (208) and a second wireless local area network link (209), the user equipment (203) being configured to simultaneously communicate over the first wireless local area network link (208) and the second wireless local area network link (209),
the first wireless local area network link (208) connecting the user equipment (203) to a first access gateway (201), wherein the first access gateway (201) is configured to connect to a first network access entity (204) providing access to a communication network via a first communication link (206),
the second wireless local area network link (209) connecting the user equipment (203) to a second access gateway (202), wherein the second access gateway (202) is configured to connect to a second network access entity (205) providing access to the communication network via a second communication link (207),
the first wireless local area network link (208) and the first communication link (206) forming a first composite communication link, and the second wireless local area network link (209) and the second communication link (207) forming a second composite communication link,
the data manager (100) comprising:
a network interface (102) being configured to receive
a first status signal indicating a link quality of the first composite communication link, and
a second status signal indicating a link quality of the second composite communication link, and
a processor (101) being configured
to determine a reduction of an amount of data of the data stream communicated over the first wireless local area network link (208) and
to determine an increase of an amount of data of the data stream communicated over the second wireless local area network link (209), if the second status signal indicates a higher link quality than a link quality that is indicated by the first status signal.

2. The data manager (100) of claim 1, wherein the processor (101) is configured
to determine a reduction of a data rate or a reduced data rate on the first wireless local area network link (208) for reducing the data amount communicated over the first wireless local area network link (208), and
to determine an increase of a data rate or an increased data rate on the second wireless local area network link (209), in particular a corresponding increased data rate, for increasing the data amount communicated over the second wireless local area network link (209).

3. The data manager (100) of anyone of the preceding claims, wherein
the network interface (102) is configured to receive
a third status signal indicating a link quality of the first communication link (206), and
a fourth status signal indicating a link quality of the second communication link (207), and wherein the processor (101) is configured
to determine a link quality of the first wireless local area network link (208) by comparing the first status signal and the third status signal and
to determine a link quality of the second wireless local area network link (209) by comparing the second status signal and the fourth status signal and
to determine the reduction of the amount of data of the data stream communicated over the first wireless local area network link (208) and
to determine the increase of the amount of data of the data stream communicated over the second wireless local area network link (209), if the link quality of the second wireless local area network link (208) is higher than the link quality of the first wireless local area network link (209).

4. The data manager (100) of anyone of the preceding claims, wherein the processor (101) is configured to determine a first amount of data of the data stream communicated over the first wireless local area network link (208) and a second amount of data of the data stream communicated over the second wireless local area network link (209), the first amount of data being smaller than the second amount of data, in order to determine the reduction of amount of data on the first wireless local area network link (208) and the increase of amount of data on the second wireless local area network link (209).

5. The data manager (100) of anyone of the preceding claims, wherein the processor (101) is configured to determine the reduction of the data communicated over the first wireless local area network link (208) and the increase of the data communicated over the second wireless local area network link (209) if a comparison of the link quality of the first wireless local area network link (208) and the link quality of the first communication link (206) indicates a disturbance of the first wireless local area network link.

6. The data manager (100) of anyone of the preceding claims, wherein the data manager is a logical entity within the communication network and wherein the data manager is allocated in at least one other functional entity of the communication network, in particular split over more than one other functional entity in an edge cloud of the communication network.

7. The data manager (100) of any of the preceding claims, wherein the respective link quality is determined by a link quality indicator that indicates at least one of the following link quality parameters: bit error rate, packet error rate, communication delay, signal to noise ratio, communication bandwidth.

8. The data manager (100) of any of the preceding claims, wherein the processor (101) is configured to determine the reduction of the amount of data and the increase of the amount of data upon a basis of a look-up table, the look-up table assigning reduction of amounts of data and increase of amounts of data to link qualities.

9. The data manager (100) of any of the preceding claims, wherein the processor (101) is configured to output a data control signal indicating the reduction of the amount of data and the increase of the amount of data, wherein the network interface (102) is configured to transmit the data control signal towards a data providing entity of the communication network.

10. The data manager (100) of any of the preceding claims, wherein the network interface (102) is communicatively connected to the first access gateway (201) for receiving the first status signal and to the second access gateway (201) for receiving the second status signals.

11. A communication system, comprising:
a first network access entity (204) for providing a network access via a first communication link (206) to a first access gateway (201) configured to connect to a communication network via the first communication link (206),
a second network access entity (205) for providing a network access via a second communication link (207) to a second access gateway (202) configured to connect to the communication network via the second communication link (207),
a user equipment (203) being configured to connect to the first access gateway (201) via a first wireless local area network link (208) and to connect to the second access gateway (202) via a second wireless local area network link (209),
the first wireless local area network link (208) and the first communication link (206) forming a first composite communication link, the second wireless local area network link (209) and the second communication link (207) forming a second composite communication link;
the user equipment (203) being configured to simultaneously communicate over the first wireless local area network link (208) and the second wireless local area network link (209); and
a data manager (100) comprising:
a network interface (102) being configured to receive
a first status signal indicating a link quality of the first composite communication link,
a second status signal indicating a link quality of the second composite communication link; and
a processor (101) being configured
to determine a reduction of an amount of data of the data stream communicated over the first wireless local area network link (208) and
to determine an increase of an amount of data of the data stream communicated over the second wireless local area network link (209), if the second status signal indicates a higher link quality than a link quality that is indicated by the first status signal.

12. The communication system of claim 11, wherein the processor (101) of the data manager (100) is configured to output a data control signal indicating the reduction of the amount of data and the increase of the amount of data, wherein the network interface (102) is configured to transmit the first data control signal towards a data providing entity of the communication network.

13. The communication system of one of claims 11 or 12, wherein the data manager (100) is allocated in a functional entity of the communication network or wherein the data manager (100) is allocated in the communication network split over a plurality of functional network entities.

14. The communication system of claim 13, wherein the functional split of the data manager (100) distributes the data manager (100) at least partially to an edge of the communication network.

15. A method for distributing data of a data stream of a user equipment (203) via a first wireless local area network link (208) and a second wireless local area network link (209), the user equipment (203) being configured to simultaneously communicate over the first wireless local area network link (208) and the second wireless local area network link (209),
the first wireless local area network link (208) connecting the user equipment (203) to a first access gateway (201) configured to connect to a first network access entity (204) via a first communication link (206), the first network access entity (204) providing access to a communication network for the first access gateway (201),
the second wireless local area network link (209) connecting the user equipment (203) to a second access gateway (202) configured to connect to a second network access entity (205) via a second communication link (207), the second network access entity (205) providing access to a communication network for the second access gateway (202),
the first wireless local area network link (208) and the first communication link (206) forming a first composite communication link, and the second wireless local area network link (209) and the second communication link (207) forming a second composite communication link, the method comprising:
receiving a first status signal indicating a link quality of the first composite communication link,
receiving a second status signal indicating a link quality of the second composite communication link;
determining a reduction of an amount of data of the data stream communicated over the first wireless local area network link (208) and an increase of an amount of data of the data stream communicated over the second wireless local area network link (209), if the second status signal indicates a higher link quality than a link quality that is indicated by the first status signal.

## Patentansprüche

1. Datenmanager (100) zur Verteilung von Daten eines Datenstroms eines Benutzergeräts (203) über eine erste drahtlose lokale Netzwerkverbindung (208) und eine zweite drahtlose lokale Netzwerkverbindung (209), wobei das Benutzergerät (203) dazu konfiguriert ist, simultan über die erste drahtlose lokale Netzwerkverbindung (208) und die zweite drahtlose lokale Netzwerkverbindung (209) zu kommunizieren,
wobei die erste drahtlose lokale Netzwerkverbindung (208) das Benutzergerät (203) mit einem ersten Zugriffs-Gateway (201) verbindet, wobei das erste Zugriffs-Gateway (201) dazu konfiguriert ist, eine Verbindung mit einer ersten Netzwerkzugriffsentität (204) herzustellen, die einen Zugriff auf ein Kommunikationsnetzwerk über eine erste Kommunikationsverbindung (206) bereitstellt,
wobei die zweite drahtlose lokale Netzwerkverbindung (209) das Benutzergerät (203) mit einem zweiten Zugriffs-Gateway (202) verbindet, wobei das zweite Zugriffs-Gateway (202) dazu konfiguriert ist, eine Verbindung mit einer zweiten Netzwerkzugriffsentität (205) herzustellen, die einen Zugriff auf das Kommunikationsnetzwerk über eine zweite Kommunikationsverbindung (207) bereitstellt,
wobei die erste drahtlose lokale Netzwerkverbindung (208) und die erste Kommunikationsverbindung (206) eine erste zusammengesetzte Kommunikationsverbindung bilden, und die zweite drahtlose lokale Netzwerkverbindung (209) und die zweite Kommunikationsverbindung (207) eine zweite zusammengesetzte Kommunikationsverbindung bilden, wobei der Datenmanager (100) umfasst:
eine Netzwerkschnittstelle (102), die konfiguriert ist zum Empfangen
eines ersten Statussignals, das eine Verbindungsqualität der ersten zusammengesetzten Kommunikationsverbindung anzeigt, und
eines zweiten Statussignals, das eine Verbindungsqualität der zweiten zusammengesetzten Kommunikationsverbindung anzeigt, und
einen Prozessor (101), der konfiguriert ist
zum Bestimmen einer Reduzierung einer Datenmenge des über die erste drahtlose lokale Netzwerkverbindung (208) kommunizierten Datenstroms, und
zum Bestimmen einer Erhöhung einer Datenmenge des über die zweite drahtlose lokale Netzwerkverbindung (209) kommunizierten Datenstroms, falls das zweite Statussignal eine höhere Verbindungsqualität anzeigt als eine Verbindungsqualität, die durch das erste Statussignal angezeigt wird.

2. Datenmanager (100) nach Anspruch 1, wobei der Prozessor (101) konfiguriert ist
zum Bestimmen einer Reduzierung einer Datenrate oder einer reduzierten Datenrate auf der ersten drahtlosen lokalen Netzwerkverbindung (208) zum Reduzieren der über die erste drahtlose lokale Netzwerkverbindung (208) kommunizierten Datenmenge, und
zum Bestimmen einer Erhöhung einer Datenrate oder einer erhöhten Datenrate auf der zweiten drahtlosen lokalen Netzwerkverbindung (209), insbesondere einer entsprechenden erhöhten Datenrate, zum Erhöhen der über die zweite drahtlose lokale Netzwerkverbindung (209) kommunizierten Datenmenge.

3. Datenmanager (100) nach einem der vorhergehenden Ansprüche, wobei die Netzwerkschnittstelle (102) konfiguriert ist zum Empfangen
eines dritten Statussignals, das eine Verbindungsqualität der ersten Kommunikationsverbindung (206) anzeigt, und
eines vierten Statussignals, das eine Verbindungsqualität der zweiten Kommunikationsverbindung (207) anzeigt, und wobei der Prozessor (101) konfiguriert ist
zum Bestimmen einer Verbindungsqualität der ersten drahtlosen lokalen Netzwerkverbindung (208) durch Vergleichen des ersten Statussignals und des dritten Statussignals und
zum Bestimmen einer Verbindungsqualität der zweiten drahtlosen lokalen Netzwerkverbindung (209) durch Vergleichen des zweiten Statussignals und des vierten Statussignals und
zum Bestimmen der Reduzierung der Datenmenge des über die erste drahtlose lokale Netzwerkverbindung (208) kommunizierten Datenstroms und
zum Bestimmen der Erhöhung der Datenmenge des über die zweite drahtlose lokale Netzwerkverbindung (209) kommunizierten Datenstroms, falls die Verbindungsqualität der zweiten drahtlosen lokalen Netzwerkverbindung (208) höher ist als die Verbindungsqualität der ersten drahtlose lokale Netzwerkverbindung (209).

4. Datenmanager (100) nach einem der vorhergehenden Ansprüche, wobei der Prozessor (101) dazu konfiguriert ist, eine erste Datenmenge des über die erste drahtlose lokale Netzwerkverbindung (208) kommunizierten Datenstroms und eine zweite Datenmenge des über die zweite drahtlose lokale Netzwerkverbindung (209) kommunizierten Datenstroms zu bestimmen, wobei die erste Datenmenge kleiner als die zweite Datenmenge ist, um die Reduzierung der Datenmenge auf der ersten drahtlosen lokalen Netzwerkverbindung (208) und die Erhöhung der Datenmenge auf der zweiten drahtlosen lokalen Netzwerkverbindung (209) zu bestimmen.

5. Datenmanager (100) nach einem der vorhergehenden Ansprüche, wobei der Prozessor (101) dazu konfiguriert ist, die Reduzierung der über die erste drahtlose lokale Netzwerkverbindung (208) kommunizierten Daten und die Erhöhung der über die zweite drahtlose lokale Netzwerkverbindung (209) kommunizierten Daten zu bestimmen, falls ein Vergleich der Verbindungsqualität der ersten drahtlosen lokalen Netzwerkverbindung (208) und der Verbindungsqualität der ersten Kommunikationsverbindung (206) eine Störung der ersten drahtlosen lokalen Netzwerksverbindung anzeigt.

6. Datenmanager (100) nach einem der vorhergehenden Ansprüche, wobei der Datenmanager eine logische Entität innerhalb des Kommunikationsnetzwerks ist und wobei der Datenmanager in mindestens einer anderen funktionalen Entität des Kommunikationsnetzwerks, zugeteilt ist, insbesondere über mehr als eine andere funktionale Entität in einer Edge-Cloud des Kommunikationsnetzwerks aufgeteilt ist.

7. Datenmanager (100) nach einem der vorhergehenden Ansprüche, wobei die jeweilige Verbindungsqualität durch einen Verbindungsqualitätsindikator bestimmt wird, der mindestens einen der folgenden Verbindungsqualitätsparameter anzeigt: Bitfehlerrate, Paketfehlerrate, Kommunikationsverzögerung, Signal-zu-Rausch-Verhältnis, Kommunikationsbandbreite.

8. Datenmanager (100) nach einem der vorhergehenden Ansprüche, wobei der Prozessor (101) dazu konfiguriert ist, die Reduzierung der Datenmenge und die Erhöhung der Datenmenge auf der Basis einer Nachschlagetabelle zu bestimmen, wobei die Nachschlagetabelle eine Reduzierung von Datenmengen und eine Erhöhung von Datenmengen zu Verbindungsqualitäten zuordnet.

9. Datenmanager (100) nach einem der vorhergehenden Ansprüche, wobei der Prozessor (101) dazu konfiguriert ist, ein Datensteuersignal auszugeben, das die Reduzierung der Datenmenge und die Erhöhung der Datenmenge anzeigt, wobei die Netzwerkschnittstelle (102) dazu konfiguriert ist, das Datensteuersignal zu einer Datenbereitstellungsentität des Kommunikationsnetzwerks zu übertragen.

10. Datenmanager (100) nach einem der vorhergehenden Ansprüche, wobei die Netzwerkschnittstelle (102) zum Empfangen des ersten Statussignals mit dem ersten Zugriffs-Gateway (201) und zum Empfangen die zweiten Statussignale mit dem zweiten Zugriffs-Gateway (201) kommunikativ verbunden ist.

11. Kommunikationssystem, umfassend:
eine erste Netzwerkzugriffsentität (204) zum Bereitstellen eines Netzwerkzugriffs über eine erste Kommunikationsverbindung (206) zu einem ersten Zugriffs-Gateway (201), das dazu konfiguriert ist, eine Verbindung mit einem Kommunikationsnetzwerk über die erste Kommunikationsverbindung (206) herzustellen,
eine zweite Netzwerkzugriffsentität (205) zum Bereitstellen eines Netzwerkzugriffs über eine zweite Kommunikationsverbindung (207) zu einem zweiten Zugriffs-Gateway (202), das dazu konfiguriert ist, eine Verbindung mit dem Kommunikationsnetzwerk über die zweite Kommunikationsverbindung (207) herzustellen,
ein Benutzergerät (203), das dazu konfiguriert ist, eine Verbindung mit dem ersten Zugriffs-Gateway (201) über eine erste drahtlose lokale Netzwerkverbindung (208) herzustellen und eine Verbindung mit dem zweiten Zugriffs-Gateway (202) über eine zweite drahtlose lokale Netzwerkverbindung (209) herzustellen,
wobei die erste drahtlose lokale Netzwerkverbindung (208) und die erste Kommunikationsverbindung (206) eine erste zusammengesetzte Kommunikationsverbindung bilden, die zweite drahtlose lokale Netzwerkverbindung (209) und die zweite Kommunikationsverbindung (207) eine zweite zusammengesetzte Kommunikationsverbindung bilden;
wobei das Benutzergerät (203) dazu konfiguriert ist, simultan über die erste drahtlose lokale Netzwerkverbindung (208) und die zweite drahtlose lokale Netzwerkverbindung (209) zu kommunizieren; und
einen Datenmanager (100), umfassend:
eine Netzwerkschnittstelle (102), die konfiguriert ist zum Empfangen
eines ersten Statussignals, das eine Verbindungsqualität der ersten zusammengesetzten Kommunikationsverbindung anzeigt,
eines zweiten Statussignals, das eine Verbindungsqualität der zweiten zusammengesetzten Kommunikationsverbindung anzeigt; und
einen Prozessor (101), der konfiguriert ist
zum Bestimmen einer Reduzierung einer Datenmenge des über die erste drahtlose lokale Netzwerkverbindung (208) kommunizierten Datenstroms und
zum Bestimmen einer Erhöhung einer Datenmenge des über die zweite drahtlose lokale Netzwerkverbindung (209) kommunizierten Datenstroms, falls das zweite Statussignal eine höhere Verbindungsqualität anzeigt als eine Verbindungsqualität, die durch das erste Statussignal angezeigt wird.

12. Kommunikationssystem nach Anspruch 11, wobei der Prozessor (101) des Datenmanagers (100) dazu konfiguriert ist, ein Datensteuersignal auszugeben, das die Reduzierung der Datenmenge und die Erhöhung der Datenmenge anzeigt, wobei das Netzwerkschnittstelle (102) dazu konfiguriert ist, das erste Datensteuersignal zu einer Datenbereitstellungsentität des Kommunikationsnetzwerks zu übertragen.

13. Kommunikationssystem nach einem der Ansprüche 11 oder 12, wobei der Datenmanager (100) in einer funktionalen Entität des Kommunikationsnetzwerks zugeteilt ist oder wobei der Datenmanager (100) über mehrere funktionale Netzwerkentitäten aufgeteilt in dem Kommunikationsnetzwerk zugeteilt ist.

14. Kommunikationssystem nach Anspruch 13, wobei die funktionale Aufteilung des Datenmanagers (100) den Datenmanager (100) zumindest teilweise an einem Edge des Kommunikationsnetzwerks verteilt.

15. Verfahren zur Verteilung von Daten eines Datenstroms eines Benutzergeräts (203) über eine erste drahtlose lokale Netzwerkverbindung (208) und eine zweite drahtlose lokale Netzwerkverbindung (209), wobei das Benutzergerät (203) dazu konfiguriert ist, simultan über die erste drahtlose lokale Netzwerkverbindung (208) und die zweite drahtlose lokale Netzwerkverbindung (209) zu kommunizieren,
wobei die erste drahtlose lokale Netzwerkverbindung (208) das Benutzergerät (203) mit einem ersten Zugriffs-Gateway (201) verbindet, das dazu konfiguriert ist, über eine erste Kommunikationsverbindung (206) eine Verbindung mit einer ersten Netzwerkzugriffsentität (204) herzustellen, wobei die erste Netzwerkzugriffsentität (204) einen Zugriff auf ein Kommunikationsnetzwerk für das erste Zugriffs-Gateway (201) bereitstellt,
wobei die zweite drahtlose lokale Netzwerkverbindung (209) das Benutzergerät (203) mit einem zweiten Zugriffs-Gateway (202) verbindet, das dazu konfiguriert ist, über eine zweite Kommunikationsverbindung (207) eine Verbindung mit einer zweiten Netzwerkzugriffsentität (205) herzustellen, wobei die zweite Netzwerkzugriffsentität (205) einen Zugriff auf ein Kommunikationsnetzwerk für das zweite Zugriffs-Gateway (202) bereitstellt,
wobei die erste drahtlose lokale Netzwerkverbindung (208) und die erste Kommunikationsverbindung (206) eine erste zusammengesetzte Kommunikationsverbindung bilden und die zweite drahtlose lokale Netzwerkverbindung (209) und die zweite Kommunikationsverbindung (207) eine zweite zusammengesetzte Kommunikationsverbindung bilden, wobei das Verfahren umfasst:
Empfangen eines ersten Statussignals, das eine Verbindungsqualität der ersten zusammengesetzten Kommunikationsverbindung anzeigt,
Empfangen eines zweiten Statussignals, das eine Verbindungsqualität der zweiten zusammengesetzten Kommunikationsverbindung anzeigt;
Bestimmen einer Reduzierung einer Datenmenge des über die erste drahtlose lokale Netzwerkverbindung (208) kommunizierten Datenstroms und einer Erhöhung einer Datenmenge des über die zweite drahtlose lokale Netzwerkverbindung (209) kommunizierten Datenstroms, falls das zweite Statussignal eine höhere Verbindungsqualität anzeigt, als eine Verbindungsqualität, die durch das erste Statussignal angezeigt wird.

## Revendications

1. Gestionnaire de données (100) pour distribuer des données d'un flux de données d'un équipement utilisateur (203) via une première liaison de réseau local sans fil (208) et une seconde liaison de réseau local sans fil (209), l'équipement d'utilisateur (203) étant configuré pour communiquer simultanément via la première liaison de réseau local sans fil (208) et la seconde liaison de réseau local sans fil (209),
la première liaison de réseau local sans fil (208) connectant l'équipement d'utilisateur (203) à une première passerelle d'accès (201), dans lequel la première passerelle d'accès (201) est configurée pour se connecter à une première entité d'accès au réseau, (204) fournissant l'accès à un réseau de communication via une première liaison de communication (206),
la seconde liaison de réseau local sans fil (209) connectant l'équipement d'utilisateur (203) à une second passerelle d'accès (202), dans lequel la seconde passerelle d'accès (202) est configurée pour se connecter à une seconde entité d'accès au réseau (205) fournissant l'accès au réseau de communication par une seconde liaison de communication (207),
la première liaison de réseau local sans fil (208) et la première liaison de communication (206) formant une première liaison de communication mixte et la seconde liaison de réseau local sans fil (209) et la seconde liaison de communication (207) formant la seconde liaison de communication mixte, le gestionnaire de données (100) comprenant :
une interface de réseau (102) étant configurée pour recevoir :
un premier signal de statut indiquant une qualité de liaison de la première liaison de communication mixte, et
un second signal de statut indiquant de qualité de liaison de la seconde liaison de communication mixte, et
un processeur (101) étant configuré pour
déterminer une réduction d'une quantité de données du flux de données communiquées via la première liaison de réseau local sans fil (208) et
déterminer une augmentation d'une quantité de données du flux de données communiquées via la seconde liaison de réseau local sans fil (208), si le second signal de statut indique une qualité de liaison supérieure à une qualité de liaison indiquée par le premier signal de statut.

2. Gestionnaire de données (100) selon la revendication 1, dans lequel le processeur (101) est configuré pour :
déterminer une réduction d'un débit de données ou un débit de données réduit sur la première liaison de réseau local sans fil (208) pour réduire la quantité de données communiquées via la première liaison de réseau local sans fil (208), et
déterminer l'augmentation d'un débit de données ou un débit de données augmenté sur la seconde liaison de réseau local sans fil (209), en particulier un débit de données augmenté correspondant, pour augmenter la quantité de données communiquées via la seconde liaison de réseau local sans fil (209).

3. Gestionnaire de données (100) selon une quelconque des revendications précédentes, dans lequel l'interface de réseau (102) est configurée pour recevoir :
un troisième signal de statut indiquant une qualité de liaison de la première liaison de communication (206), et
un quatrième signal de statut indiquant une qualité de liaison de la seconde liaison de communication (207) et dans lequel le processeur (101) est configuré pour
déterminer une qualité de liaison de la première liaison de réseau local sans fil (208) en comparant le premier signal de statut et le troisième signal de statut et
déterminer une qualité de liaison de la première liaison de réseau local sans fil (209) en comparant le premier signal de statut et le troisième signal de statut et
déterminer une qualité de liaison de la seconde liaison de réseau local sans fil (208) en comparant le second signal de statut et le quatrième signal de statut et
déterminer la réduction de la quantité de données du flux de données communiquées via la première liaison de réseau local sans fil (208) et
déterminer l'augmentation de la quantité de données du flux de données communiquées via la seconde liaison de réseau local sans fil (209), si la qualité de liaison de la seconde liaison de réseau local sans fil (208) est supérieure à la qualité de liaison de la première liaison de réseau local sans fil (209).

4. Gestionnaire de données (100) selon une quelconque des revendications précédentes, dans lequel le processeur (101) est configuré pour déterminer une première quantité de données du flux de données communiquées via la première liaison de réseau local sans fil (208) et une seconde quantité de données du flux de données communiquées via la seconde liaison de réseau local sans fil (209), la première quantité de données étant plus petite que la seconde quantité de données, de manière à déterminer la réduction de la quantité de données sur la première liaison de réseau local sans fil (208) et l'augmentation de la quantité de données sur la seconde liaison de réseau local sans fil (209).

5. Gestionnaire de données (100) selon une quelconque des revendications précédentes, dans lequel le processeur (101) est configuré pour déterminer la réduction des données communiquées via la première liaison de réseau local sans fil (208) et l'augmentation des données communiquées via la seconde liaison de réseau local sans fil (209) si une comparaison de la qualité de liaison de la première liaison de réseau local sans fil (208) et la qualité de liaison de la première liaison de communication (206) indique une perturbation de la première liaison de réseau local sans fil.

6. Gestionnaire de données (100) selon une quelconque des revendications précédentes, dans lequel le gestionnaire de données est une entité logique à l'intérieur du réseau de communication et dans lequel le gestionnaire de données est alloué dans au moins une autre entité fonctionnelle du réseau de communication, en particulier divisé sur une autre entité fonctionnelle dans un nuage périphérique du réseau de communication.

7. Gestionnaire de données (100) selon une quelconque des revendications précédentes, dans lequel la qualité de liaison respective est déterminée par un indicateur de la qualité de liaison qui indique au moins un des paramètres de qualité de liaison suivants : taux d'erreur binaire, taux d'erreur de paquets, retard de communication, rapport signal sur bruit, bande passante de communication.

8. Gestionnaire de données (100) selon une quelconque des revendications précédentes, dans lequel le processeur (101) est configuré pour déterminer la réduction de la quantité de données et l'augmentation de la quantité de données sur la base d'une table de recherche, la table de recherche assignant une réduction des quantités de données et une augmentation des quantités de données aux qualités de liaison.

9. Gestionnaire de données (100) selon une quelconque des revendications précédentes, dans lequel le processeur (101) est configuré pour émettre un signal de commande de données indiquant la réduction de la quantité de données et l'augmentation de la quantité de données, dans lequel l'interface de réseau (102) est configurée pour transmettre le signal de commande de données dans la direction d'une entité de fourniture de données du réseau de communication.

10. Gestionnaire de données (100) selon une quelconque des revendications précédentes, dans lequel l'interface de réseau (102) est connectée en communication à la première passerelle d'accès (201) pour recevoir le premier signal de statut et à la seconde passerelle d'accès (201) pour recevoir les seconds signaux de statut.

11. Système de communication, comprenant :
une première entité d'accès au réseau (204) pour fournir un accès au réseau via une première liaison de communication (206) à une première passerelle d'accès (201) configurée pour se connecter à un réseau de communication via la première liaison de communication (206),
une seconde entité d'accès au réseau (205) pour fournir l'accès au réseau via une seconde liaison de communication (207) à une seconde passerelle d'accès (202) configurée pour se connecter au réseau de communication via la seconde liaison de communication (207),
un équipement d'utilisateur (203) étant configuré pour se connecter à la première passerelle d'accès (201) via une première liaison de réseau local sans fil (208) et se connecter à la seconde passerelle d'accès (202) via une seconde liaison de réseau local sans fil (209),
la première liaison de réseau local sans fil (208) et la première liaison de communication (206) formant une première liaison de communication mixte, la seconde liaison de réseau local sans fil (209) et la seconde liaison de communication (207) formant une seconde liaison de communication mixte,
l'équipement d'utilisateur (203) étant configuré pour communiquer simultanément via la première liaison de réseau local sans fil (208) et la seconde liaison de réseau local sans fil (209) ; et
un gestionnaire de données (100) comprenant :
une interface de réseau (102) étant configurée pour recevoir :
un premier signal de statut indiquant une qualité de liaison de la première liaison de communication mixte, et
un second signal de statut indiquant de qualité de liaison de la seconde liaison de communication mixte, et
un processeur (101) étant configuré pour
déterminer une réduction d'une quantité de données du flux de données communiquées via la première liaison de réseau local sans fil (208) et
déterminer une augmentation d'une quantité de données du flux de données communiquées via la seconde liaison de réseau local sans fil (208), si le second signal de statut indique une qualité de liaison supérieure à une qualité de liaison qui est indiquée par le premier signal de statut.

12. Système de communication selon la revendication 11, dans lequel le processeur (101) du gestionnaire de données (100) est configuré pour émettre un signal de commande de données indiquant la réduction de la quantité de données et l'augmentation de la quantité de données, dans lequel l'interface de réseau (102) est configurée pour transmettre le premier signal de commande de données vers une entité de fourniture de données du réseau de communication.

13. Système de communication selon la revendication 11 ou 12, dans lequel le gestionnaire de données (100) est alloué dans une entité fonctionnelle du réseau de communication ou dans lequel le gestionnaire de données (100) est alloué dans le réseau de communication divisé sur une pluralité d'entités de réseau fonctionnelles.

14. Système de communication selon la revendication 13, dans lequel la division fonctionnelle du gestionnaire de données (100) distribue le gestionnaire de données (100) au moins partiellement vers une périphérie du réseau de communication.

15. Procédé de distribution de données d'un flux de données d'un équipement d'utilisateur (203) via une première liaison de réseau local sans fil (208) et une seconde liaison de réseau local sans fil (209), l'équipement d'utilisateur (203) étant configuré pour communiquer simultanément via la première liaison de réseau local sans fil (208) et la seconde liaison de réseau local sans fil (209),
la première liaison de réseau local sans fil (208) connectant l'équipement d'utilisateur (203) à une première passerelle d'accès (201) configurée pour se connecter une première entité d'accès au réseau (204) via une première liaison de communication (206), la première entité d'accès au réseau (204) fournissant l'accès à un réseau de communication pour la première passerelle d'accès (201),
la seconde liaison de réseau local sans fil (209) connectant l'équipement d'utilisateur (203) à une seconde passerelle d'accès (202) configurée pour se connecter à une seconde entité d'accès au réseau (205) via une seconde liaison de communication (207), la seconde entité d'accès au réseau (205) fournissant l'accès à un réseau de communication pour la seconde passerelle d'accès (202),
la première liaison de réseau local sans fil (208) et la première liaison de communication (206) formant une première liaison de communication mixte, et la seconde liaison de réseau local sans fil (209) et la seconde liaison de communication (207) formant une seconde liaison de communication mixte, le procédé comprenant de :
recevoir un premier signal de statut indiquant une qualité de liaison de la première liaison de communication mixte ;
recevoir un second signal de statut indiquant une qualité de liaison de la seconde liaison de communication mixte ;
déterminer une réduction d'une quantité de données du flux de données communiquées via la première liaison de réseau local sans fil (208) et une augmentation d'une quantité de données du flux de données communiquées via la seconde liaison de réseau local sans fil (209) et le second signal de statut indique une qualité de liaison plus élevée qu'une qualité de liaison qui est indiquée par le premier signal de statut.
